# EUROPEAN PATENT SPECIFICATION

(11) **EP 0 407 309 B1**
(45) Date of publication and mention of the grant of the patent: **27.04.1994**
(21) Application number: 90420284.3
(22) Date of filing: 14.06.1990
(51) Int. Cl.: C09D 123/04, C09J 123/04, C08L 23/04

(54) **Low temperature, high speed extrusion coating process and polyethylene compositions useful therefor**
Verfahren zur Hochgeschwindigkeitsextrusionsbeschichtung bei niedriger Temperatur und dafür geeignete Polyäthylen-Zusammensetzung
Procédé pour le revêtement par extrusion à haute vitesse et à basse température et compositions de polyéthylène pour ce procédé

(30) Priority: 15.06.1989 US 366903
(43) Date of publication of application: 09.01.1991
(73) Proprietor: EASTMAN CHEMICAL COMPANY, Kingsport, TN 37660 (US)
(72) Inventor: Edwards, Ray, c/o EASTMAN COMPANY, Rochester, New York 14650-2201 (US)
(74) Representative: Behrens, Dieter, Dr.-Ing.

(56) References cited:
- EP-A- 0 052 889
- FR-A- 2 175 106
- FR-A- 2 184 657
- GB-A- 1 052 998

## Description

This invention relates to extrusion coating processes. In one aspect, this invention relates to polyethylene compositions useful for extrusion coating. In another aspect, this invention relates to high speed extrusion coating, wherein the extruded material exhibits excellent adhesion to substrate, even when the extrusion process is carried out at unusually low extrusion coating temperatures.

### Background of the Invention

Extruding a coating of a polyolefin or blends of polyolefins onto a substrate, such as paper or aluminum foil, to form an extrusion coated substrate, is well known in the art. Various polyethylenes and blends of polyethylenes have been widely used as extrusion coating compositions. However, the use of polyethylene-based coatings has several drawbacks. For example, such materials frequently lack the desired level of adhesion to substrate, especially when extrusion coating is carried out at low temperatures and/or at extremely high coating speeds.

Low temperature extrusion coating processes are useful with substrates which are temperature sensitive. Low temperature extrusion coating processes are also useful when applying coatings containing additives which are temperature sensitive. When prior art coating materials are employed at low extrusion coating temperatures, they are not capable of adhering to the substrate with desired degree of adhesion.

High coating speeds are desirable so as to enable economically attractive operation of extrusion coating equipment. High extrusion coating speeds are also desirable so as to permit the preparation of very thin extrusion coatings.

EPA 52,889 discloses compositions which can be extruded at low temperature and which provide coatings having a good adhesion on paper. Such compositions comprise polyethylene (HPLDPE) and a linear low density ethylene hydrocarbon copolymer.

This patent teaches that varying the % of the components in the blend makes it possible to adjust the maximum coating speeds. Although minimum thicknesses of 0.1 mil are said to be achieved and extrusion speeds up to 1100 ft/min are cited in the examples, the maximum claimed coating speed is only greater than 600 ft/min for obtaining a coating free of pinholes at a thickness of about 0.013 mm.

FR 2,175,106 discloses compositions comprising polyethylene having a melt index comprised between 0.5 and 50 at 190°C and 0.5 to 30% of a DAC-B hydrocarbon resins.

Such compositions can be extruded at low temperature to provide coatings having a thickness of 0.025 mm with a peripheral speed of the coating roll of 122 m/min. There is no indication in this patent that such compositions could be used to obtain very thin layers at very high coating speeds.

What is desired, therefore, are polyethylene-based extrusion coating materials which are capable of producing substantially uniform extrusion coatings when applied to a variety of substrates employing a process which operates at temperatures below those ordinarily used for extrusion coating processes.

### Statement of the Invention

In accordance with the present invention, there are provided novel compositions comprising a defined polyethylene component and specified quantities of defined tackifying resins. The invention compositions are capable of being applied to a variety of substrates by an extrusion coating process carried out at an extrusion coating temperature of no greater than about 480°F (about 250°C). The invention extrusion coating process is capable of applying substantially uniform coatings having a thickness of at least about 0.0075 mm at a coating speed of at least about 300 meters (about 1000 feet) per minute.

### Detailed Description of the Invention

In accordance with the present invention, there are provided compositions capable of low temperature extrusion coating with good adhesion to substrate. The invention compositions are as claimed in Claim 1.

In accordance with a particular embodiment of the present invention, there is provided a process for the low-temperature extrusion coating of a substrate with a polyethylene film having a thickness of at least about 0.0075 mm, wherein the extrusion coating process is capable of substantially uniformly coating at a coating speed of at least about 300 meters (about 1000 feet) per minute of substrate at temperatures no greater than about 480°F (250°C). The invention process comprises applying the above-described compositions to at least one surface of the substrate by extrusion coating at a temperature in the range of about 400 up to 480°F (about 205 up to 250°C).

The present invention, also provides articles of manufacture prepared by the process of the invention.

Polyethylene components useful in the practice of the present invention are materials having a melt index at 190°C falling in the range of about 20 up to 80 decigrams per minute; with materials having melt index falling in the range of about 30 up to 80 being most preferred.

Polyethylene materials useful in the practice of the present invention are typically low density materials. Polyethylenes having densities in the range of about 0.915 up to 0.926 are presently preferred materials.

It is desirable that the polyethylene materials employed in the practice of the present invention have a sufficiently broad molecular weight distribution so that the resulting composition is capable of being extrusion coated at temperatures in the range of about 400 up to 480°F (about 205 up to 250°C). Those of skill in the art recognize that materials of very narrow-molecular weight distribution will not be suitable for the desired extrusion coating application, while materials having intermediate, up to very broad molecular weight distributions, will be more suitable for the desired extrusion coating application. Typically, materials employed in the practice of the present invention will have a polydispersity index, i.e., ratio of weight average molecular weight (Mw) to number average molecular weight (Mn), of at least about 7.

It is also desirable that the polyethylene materials employed in the practice of the present invention have a minimum melting point onset temperature of at least about 95°C, as measured by differential scanning calorimetry (DSC). Materials having such melting properties provide excellent handling characteristics for extrusion coating applications.

Polyethylene materials useful in the practice of the present invention can be prepared by polymerizing relatively high purity ethylene in a stirred reactor at pressures above about 1000 atmospheres and temperatures above about 200°C, using a peroxide-type of catalyst, such as, for example, di-tertiarybutyl peroxide. Lower purity ethylene containing inert materials such as methane, ethane, carbon dioxide, and the like, may be introduced into the ethylene feed to control the purity thereof. Publications to which the reader is directed for further general details on the preparation of suitable low density polyethylenes are the text Polythene by Renfrew and Morgan, at pp. 11-17 and the article in Petroleum Refiner (1956) by Thomasson, McKetta and Ponder, found at p. 191.

The tackifying resins useful in the compositions of this invention have Ring and Ball softening points of about 90°C to 150°C and can be hydrocarbon resins, synthetic and natural polyterpenes, rosin esters and the like.

Suitable resins are the terpene polymers such as the polymeric, resinous materials including the dimers as well as high polymers obtained by polymerization and/or copolymerization of terpene hydrocarbons such as the alicyclic, monocyclic, and bicyclic monoterpenes and their mixtures, including allo-ocimene, carene, isomerized pinene, pinene, dipentene, terpinene, terpinolene, limonene, terpentine, a terpene cut or fraction, and various other terpenes. A preferred resin is Nirez (available from Reichhold Chemical), a polymer of β-pinenes Particularly useful resin esters are the amber colored 11.

The quantity of tackifying resin employed in the invention compositions can vary widely, typically falling within the range of about 5 up to 15 weight percent, based on the weight of the total composition. Preferred quantities of tackifying resin fall within the range of about 7 up to 10 weight percent. These quantities are preferred because at these levels of tackifier, maximum adhesion per quantity of tackifier added is achieved. Thus, at lower levels of tackifier, reduced adhesion is observed while little added benefit is obtained with higher levels of tackifier.

As noted above, the invention compositions can optionally further contain in the range of about 25 up to 200 parts per million of a transition metal pro-oxidant. Transition metal compounds contemplated for use in the practice of the present invention are salts formed by combining transition metals such as cobalt, manganese, and copper with organic acids of sufficiently high molecular weight to give salts soluble in the polymer blends employed.

As employed herein, the term "transition metal" is intended to include elements having greater than 8, and less than 18, electrons in the outer shell of the ionic species. Transition metals are thus usually capable of electron transitions between their outer shells. Thus, the variable valency states which result render these elements capable of inducing oxidation reactions. In practice, those transition elements which are highly toxic and/or radioactive are extremely rare and costly, and thus are not normally encountered in industrial use as oxidation catalysts. More typically encountered transition metals whose salts and complexes are useful for such applications include cerium, zinc, copper, silver, nickel, cobalt, iron, manganese, chromium, and vanadium. These elements can be used in the form of such salts as possess an adequate level of solubility in the polymer melt, typically including such forms as stearates, oleates, behenates, miristates, erucates, lineoleates, naphthanates, or complexes such as acetonyl acetates, 8-hydroxyquinolinates, metal amine salt complexes, and the like, as well as mixtures of any two or more thereof.

Preferred quantities of pro-oxidant, when employed, fall in the range of about 100 up to 150 parts per million, based on the total weight of polymer composition.

In accordance with an alternative embodiment of the present invention, there may further be included in the invention compositions up to about 10 weight percent of a biodegradable organic polymer. Compounds contemplated by the term "biodegradable organic polymer" include polymeric materials which are themselves intrinsically sensitive to direct enzyme chain scission in the presence of micro-organisms which occur profusely in the environment. Exemplary materials contemplated by the above definition include polymeric carbohydrates such as corn starch.

When employed, quantities in the range of about 1 up to 10 weight percent of biodegradable organic polymer are typically employed. Preferably, in the range of about 4 up to 6 weight percent of biodegradable organic polymer will be employed.

The compositions of this invention may be prepared in various ways such as dry blending and then passing through a compounding extruder, compounding on a milling roll or in a Banbury mixer or by fusion. Any method whereby the components can be blended together will produce the desired blend. For example, pellets of each polymer can be blended mechanically and the blend then fed to an extruder where it is fused and extruded.

Additives, stabilizers, fillers and the like can be added to the compositions of the present invention. Such materials can be present in the components forming the polymer blend, or may be added when the polymers are blended to form the extrusion coating composition.

Processes for applying the invention extrusion coating materials to a substrate are well known in the art and are well within the skill of the artisan. Similarly, processes employing the invention extrusion coating materials for the extrusion/lamination of two or more substrates are well known in the art. Those of skill in the art can readily apply the invention compositions to such processes.

Substrates contemplated for use in the practice of the present invention include papers, paperboards, fibers, polymeric materials, metal foils, and the like. Polymeric substrates include polyolefins or functionally modified polyolefins, polyesters or functionally modified polyolefins, polyesters or functionally modified polyesters, ethylene-vinyl alcohol copolymers or functionally modified derivatives thereof, polyamides or functionally modified polyamides, and the like.

The invention compositions, upon application to substrate by extrusion coating techniques, form a destructive bond, i.e., the substrate-coating bond is sufficiently strong that efforts to separate the coating coating or the substrate.

This invention can be further illustrated by the following examples of preferred embodiments thereof, although it will be understood that these examples are included merely for purposes of illustration and are not intended to limit the scope of the invention unless otherwise specifically indicated.

### Examples

The following examples show the criticality of melt index in achieving the required minimum coating thickness as thin as about 0.0075 mm at extrusion coating speeds of at least 300 m per minute and greater. The samples were extrusion coated under these identical conditions:
- Extrudate temperature:: 440°F (227°C)
- Die opening:: 0.020-inches (0.5 mm)
- Die width:: 16.0-inches (400 mm)
- Extrusion output rate:: 160-lb/hr (10-lb/hr/inch of die width) [72 kg/hr (0.18 kg/hr/mm of die width)]
- Die opening-to-nip distance:: 5.25-inches (131.25 mm)
- Laminator's Maximum Speed:: 1400-fpm (430 m/min)

Heater settings on the extruder barrel, adapter, and die were 460°F (238°C) or lower.

### Example 1

A 3.5-dg/min melt index polyethylene containing 10 percent by weight of a tackifier, Nirez 1135 (a polymerized β-pinene having a RBSP of about 135°C, was extrusion coated as described above. It was only possible to achieve a minimum thickness of 1.3-mils (0.033 mm) at a maximum speed of 325-fpm (about 100 meters per minute), as limited by extrudate edge tear.

### Example 2

A 7.0-dg/min melt index polyethylene containing 10 percent by weight of a tackifier, Nirez 1135, was extrusion coated as described above. It was only possible to achieve a minimum thickness of 0.9-mils (0.023 mm) at a maximum speed of 475-fpm (145 m/min), as limited by extrudate edge tear.

### Example 3

A 13-dg/min melt index polyethylene containing 10 percent by weight of a tackifier, Nirez 1135, was extrusion coated as described above. It was only possible to achieve a minimum thickness of 0.5-mils (0.013 mm) at a maximum speed of 875-fpm (255 m/min), as limited by extrudate edge tear.

### Example 4

A 20-dg/min melt index polyethylene containing 10 percent by weight of a tackifier, Nirez 1135, was extrusion coated as described above. It was only possible to achieve a minimum thickness of 0.4-mils (0.010 mm) at a maximum speed of 1050-fpm (320 m/min), as limited by extrudate edge tear.

### Example 5

A 32-dg/min melt index polyethylene containing 10 percent by weight of a tackifier, Nirez 1135, was extrusion coated as described above. It was possible to achieve a minimum thickness of less than 0.3-mil (0.0075 mm) at a maximum speed in excess of 1400-fpm (430 m/min). No extrudate edge tear or edge weaving were observed at a coating speed of 1400-fpm (430 m/min).

### Example 6

A 50-dg/min index polyethylene containing 10 percent by weight of a tackifier, Nirez 1135, was extrusion coated as described above. It was possible to achieve a minimum thickness of less than 0.3-mil (0.0075 mm) at a maximum speed in excess of 1400-fpm (430 m/min). No extrudate edge tear or edge weaving were observed at a coating speed of 1400-fpm (430 m/min).

### Example 7

An 80-dg/min melt index polyethylene containing 10 percent by weight of a tackifier, Nirez 1135, was extrusion coated as described above. It was possible to achieve a minimum thickness of less than 0.3-mil (0.0075 mm) at a maximum speed in excess of 1400-fpm (430 m/min). No extrudate edge tear or edge weaving were observed at a coating speed of 1400-fpm (430 m/min).

### Example 8

A 100-dg/min melt index polyethylene containing 10 percent by weight of a tackifier, Nirez 1135, was extrusion coated as described above. It was only possible to achieve a minimum thickness of 1.2-mils (0.030 mm) at a maximum speed of 350-fpm (107 m/min), as limited by severe weaving of the extrudate edge.

### Example 9

A 130-dg/min melt index polyethylene containing 10 percent by weight of a tackifier, Nirez 1135, was extrusion coated as described above. It was only possible to achieve a minimum thickness of 1.5-mils (0.039 mm) at a maximum speed of 275-fpm (84 m/min), as limited by severe weaving of the extrudate edge.

### Example 10

A 200-dg/min melt index polyethylene containing 10 percent by weight of a tackifier, Nirez 1135, was extrusion coated as described above. It was only possible to achieve a minimum thickness of 2.1-mils (0.053 mm) at a maximum speed of 200-fpm (61 m/min), as limited by severe weaving of the extrudate edge.

The invention has been described in detail with particular reference to preferred embodiments thereof, but it will be understood that variations and modifications can be effected within the spirit and scope of the invention.

## Claims

1. A composition capable of low temperature extrusion coating with good adhesion to substrate, said composition comprising :
(a) a polyethylene component having a melt index in the range of about 30 to 80 dg per minute at 190°C, and having a Mw/Mn ratio of at least about 7, and
(b) in the range of 5 up to 15 wt %, based on the weight of the total composition, of a polymerized β-pinene hydrocarbon tackifying resin having a Ring and Ball Softening Point in the range of 90°C up to 150°C.

2. A composition in accordance with Claim 1 wherein said polyethylene component has a density of 0.915 up to 0.926 g/cm³.

3. A composition in accordance with Claim 1 containing in the range of 7 up to 10 wt % of said hydrocarbon tackifying resin.

4. A composition in accordance with Claim 4 wherein said hydrocarbon tackifying resin is a polymerized β-pinene.

5. A composition in accordance with Claim 5 wherein said polyethylene component has a minimum melting point onset temperature of at least about 95°C, as measured by differential scanning calorimetry (DSC).

6. A composition in accordance with Claim 1 further comprising in the range of 25 up to 200 parts per million of a transition metal pro-oxidant.

7. A composition in accordance with Claim 6 further comprising in the range of 1 up to 10 wt % of a biodegradable organic polymer.

8. A composition in accordance with Claim 7 wherein said biodegradable organic polymer is polymeric carbohydrate.

9. A composition in accordance with Claim 7 wherein said biodegradable organic polymer is present in amounts ranging from 4 up to 6 wt %.

10. A composition in accordance with Claim 6 wherein said transition metal pro-oxidant is selected from the group consisting of cerium, zinc, copper, silver, nickel, cobalt, iron, manganese, chromium, and vanadium.

11. A composition in accordance with Claim 6 wherein said pro-oxidant is present in amounts ranging from 100 up to 150 parts per million.

12. A process for the low-temperature extrusion coating of a substrate with a polyethylene film having a thickness as thin as 0.0075 mm, wherein said extrusion coating process is capable of substantially uniformly coating at least 300 m per minute of substrate at temperature no greater than 480°F (250°C), said process comprising :
applying the composition of Claim 1 to at least one surface of said substrate by extrusion coating at a temperature in the range of 400 up to 480°F (205 up to 250°C).

13. A process in accordance with Claim 15 wherein said substrate is selected from :
papers,
paperboards,
fibers,
polymeric materials, or
metal foils.

14. A process in accordance with Claim 16 wherein said polymeric materials are selected from :
polyolefins or functionally modified polyolefins,
polyesters or functionally modified polyesters,
ethylene-vinyl alcohol copolymers,
polyamides or functionally modified polyamides.

## Patentansprüche

1. Zusammensetzung, die sich für die Extruderbeschichtung bei niedrigen Temperaturen mit guter Adhäsion gegenüber einem Substrat eignet, und die aufweist:
(a) eine Polyethylen-Komponente mit einem Schmelz-Index im Bereich von etwa 30 - 80 dg pro Minute bei 190°C und einem Mw/Mn-Verhältnis von mindestens etwa 7, und
(b) 5 bis zu 15 Gew.-%, bezogen auf das Gewicht der Gesamt-Zusammensetzung, eines klebrigmachenden Harzes auf Basis eines polymerisierten β-Pinen-Kohlenwasserstoffs mit einem Erweichungspunkt, bestimmt nach der Ring- und Kugelmethode,im Bereich von 90°C bis zu 150°C.

2. Zusammensetzung nach Anspruch 1, in der die Polyethylen-Komponente eine Dichte von 0,915 bis zu 0,926 g/cm³ aufweist.

3. Zusammensetzung nach Anspruch 1, die 7 bis zu 10 Gew.-% des klebrigmachenden Harzes enthält.

4. Zusammensetzung nach Anspruch 1, in der das klebrigmachende Kohlenwasserstoffharz ein polymerisiertes β-Pinen ist.

5. Zusammensetzung nach Anspruch 1, in der die Polyethylen-Komponente eine Mindest-Schmelzpunkts-Anfangstemperatur von mindestens etwa 95°C aufweist, bestimmt durch Differential-Abtast-Kalorimetrie (DSC).

6. Zusammensetzung nach Anspruch 1, die ferner 25 bis zu 200 Teile pro Million eines Übergangsmetall-Pro-Oxidationsmittels enthält.

7. Zusammensetzung nach Anspruch 6, die ferner 1 bis zu 10 Gew.-% eines biologisch abbaubaren organischen Polymeren enthält.

8. Zusammensetzung nach Anspruch 7, in der das biologisch abbaubare organische Polymer ein polymeres Kohlehydrat ist.

9. Zusammensetzung nach Anspruch 7, in der das biologisch abbaubare organische Polymer in Mengen von 4 bis zu 6 Gew.-% vorliegt.

10. Zusammensetzung nach Anspruch 6, in der das Übergangsmetall-Pro-Oxidationsmittel ausgewählt ist aus der Gruppe bestehend aus Cer, Zink, Kupfer, Silber, Nickel, Cobalt, Eisen, Mangan, Chrom und Vanadium.

11. Zusammensetzung nach Anspruch 6, in der das Pro-Oxidationsmittel in Mengen von 100 bis zu 150 Teilen pro Million vorliegt.

12. Verfahren der Extruderbeschichtung eines Substrates mit einem Polyethylenfilm einer Dicke von so dünn wie 0,0075 mm bei niedriger Temperatur, bei dem mindestens 300 m des Substrates pro Minute praktisch gleichförmig beschichtet werden können, bei einer Temperatur nicht höher als 250°C, das umfaßt:
Aufbringen der Zusammensetzung nach Anspruch 1 auf mindestens eine Oberfläche des Substrates durch Extruderbeschichtung bei einer Temperatur im Bereich von 205 bis zu 250°C.

13. Verfahren nach Anspruch 12, bei dem das Substrat ausgewählt ist aus:
Papieren, Pappen, Fäden und Fasern, polymeren Materialien oder Metallfolien.

14. Verfahren nach Anspruch 13, bei dem die polymeren Materialien ausgewählt sind aus:
Polyolefinen oder funktionell modifizierten Polyolefinen,
Polyestern oder funktionell modifizierten Polyestern,
Ethylen-Vinylalkohol-Copolymeren, Polyamiden oder funktionell modifizierten Polyamiden.

## Revendications

1. Composition pour le revêtement par extrusion à basse température avec une bonne adhérence sur le support, ladite composition comprenant:
(a) un composant de polyéthylène ayant un indice de fusion dans l'intervalle d'environ 30 à 80 dg/min à 190°C et ayant un rapport Mw/Mn d'au moins environ 7 et
(b) de 5 à 15 % en poids, par rapport au poids de la composition totale, d'une résine adhésive du type hydrocarbure de la série du β-pinène polymérisé ayant un point de ramollissement par la méthode bille et anneau dans l'intervalle de 90 à 150°C.

2. Composition selon la revendication 1, dans laquelle ledit composant de polyéthylène a une densité de 0,915 à 0,926 g/cm³.

3. Composition selon la revendication 1, contenant de 7 à 10 % en poids de ladite résine adhésive d'hydrocarbure.

4. Composition selon la revendication 1, dans laquelle ladite résine adhésive d'hydrocarbure est un β-pinène polymérisé.

5. Composition selon la revendication 1, dans laquelle ledit composant de polyéthylène a une température minimale de début de point de fusion d'au moins environ 95°C, mesurée par calorimétrie différentielle (DSC).

6. Composition selon la revendication 1, comprenant en outre de 25 à 200 parties par million d'un métal de transition inducteur d'oxydation.

7. Composition selon la revendication 6 comprenant en outre de 1 à 10 % en poids d'un polymère organique biodégradable.

8. Composition selon la revendication 7 dans laquelle ledit polymère organique biodégradable est un hydrate de carbone polymère.

9. Composition selon la revendication 7 dans laquelle ledit polymère organique biodégradable est présent en quantités dans l'intervalle de 4 à 6 % en poids.

10. Composition selon la revendication 6 dans laquelle ledit métal de transition inhibiteur d'oxydation est choisi parmi le cérium, le zinc, le cuivre, l'argent, le nickel, le cobalt, le fer, le manganèse, le chrome et le vanadium.

11. Composition selon la revendication 6 dans laquelle ledit inducteur d'oxydation est présent en quantités dans l'intervalle de 100 à 150 parties par million.

12. Procédé pour le revêtement par extrusion à basse température d'un support avec un film de polyéthylène ayant une épaisseur aussi faible que 0,0075 mm, dans lequel ledit procédé de revêtement par extrusion est capable de revêtir de manière pratiquement uniforme au moins 300 m/min du support à une température de pas plus de 480°F (250°C), ledit procédé comprenant:
l'application de la composition selon la revendication 1 sur au moins une face dudit support par revêtement par extrusion à une température dans l'intervalle de 400 à 400°F (205 à 250°C).

13. Procédé selon la revendication 12, dans lequel ledit support est choisi parmi:
les papiers,
les cartons,
les fibres,
les matières polymères ou
les feuilles métalliques.

14. Procédé selon la revendication 13, dans lequel lesdites matières polymères sont choisies parmi :
les polyoléfines ou polyoléfines fonctionnellement modifiées,
les polyesters ou polyesters fonctionnellement modifiés,
les copolymères éthylène-alcool vinylique,
les polyamides ou polyamides fonctionnellement modifiés.
